# EUROPÄISCHE PATENTSCHRIFT

(11) **EP 2 886 302 B1**
(45) Veröffentlichungstag und Bekanntmachung des Hinweises auf die Patenterteilung: **03.06.2020**
(21) Anmeldenummer: 14196374.4
(22) Anmeldetag: 04.12.2014
(51) Int. Cl.: B29C 65/02, B29K 105/04, B29C 65/36, B29L 31/30, B29C 65/16, B29C 65/14, B29L 31/60

(54) **VERFAHREN ZUR HERSTELLUNG VON VERSTÄRKTEN MATERIALIEN UND MATERIAL ERHÄLTLICH AUS DIESEM VERFAHREN**
METHOD FOR THE MANUFACTURE OF REINFORCED MATERIALS AND MATERIAL THAT CAN BE OBTAINED FROM THIS METHOD
PROCÉDÉ DE FABRICATION DE MATÉRIAUX RENFORCÉS ET MATÉRIEL OBTENU À PARTIR DE CE PROCÉDÉ

(30) Priorität: 05.12.2013 DE 102013018158
(43) Veröffentlichungstag der Anmeldung: 24.06.2015
(73) Patentinhaber: Airbus Defence and Space GmbH, 85521 Ottobrunn (DE)
(72) Erfinder: Weimer, Christian, 81539 München (DE); Parlevliet, Patricia, 81539 München (DE)
(74) Vertreter: LKGLOBAL Lorenz & Kopf PartG mbB Patentanwälte

(56) Entgegenhaltungen:
- WO-A1-93/12344
- WO-A1-98/29243
- US-A- 5 589 015
- US-A- 5 832 594

## Beschreibung

### TECHNISCHES GEBIET

Die Erfindung betrifft die Gestaltung sowie die Herstellung von in Dickenrichtung des Kernverbundes durchsetzenden Armierungselementen zur Verstärkung von Kernverbundstruktu ren.

Die Erfindung eignet sich zur Armierung von Kernverbund-Strukturen. Kernverbundstrukturen enthalten üblicherweise eine relativ dicke Kernschicht geringer Rohdichte, z.B. aus Schaumstoff oder aus vertikal verlaufenden Zellen mit hexagonalem Querschnitt gebildete wabenartige Kernstruktur, und optional Deckschichten.

Mit Hilfe dieser Erfindung können die transversalen (z. B. Druck- bzw. Zugsteifigkeit und -festigkeit) senkrecht zur Ebene des Kernverbundes und die Schubsteifigkeit und -festigkeit in der Ebene des Kernverbundes verbessert werden.

Zudem wird durch die Verwendung weniger verschiedener Materialien die Recyclingfähighkeit des Materials verbessert.

### HINTERGRUND

Aufgrund des guten Verhältnisses von Steifigkeit und Festigkeit zur Dichte finden im Bereich des Flugzeugbaus Verbundwerkstoffe und insbesondere Kernverbundstrukturen einen breiten Anwendungsbereich. Solche Verbundwerkstoffe, beispielsweise Kernverbundstrukturen, werden im Allgemeinen aus einer oberen und einer unteren Deckschicht oder Decklage gebildet, zwischen denen sich zur Erhöhung der Steifigkeit eine Schicht geringer Rohdichte, z.B. aus Schaumstoff oder aus vertikal verlaufenden Zellen mit hexagonalem Querschnitt gebildete wabenartige, in der Regel gefüllte, Kernstruktur befinden kann.

Schaumstoffe sind insbesondere bei der Bauteilherstellung sowie im Bereich der erweiterten Bauteileigenschaften aufgrund ihrer Multifunktionalität für die Anwendung in Kernverbunden für großformatige Strukturbauteile, z.B. im Bereich der Luftfahrt, von Interesse. Zur Verstärkung der schaumbasierten Kernverbunde werden üblicherweise Nähtechniken oder Prepreg-Pinningtechniken eingesetzt, mit denen Fasern oder Fäden in Hartschaumbauteile eingebracht werden können. Nach einem Harzinfiltrationsprozess tragen die mit Fasern durchsetzten Bereiche dann zur mechanischen Verstärkung des Schaumstoffs bei.

Bei den zur Verstärkung eingebrachten Fasern oder Fäden kann es sich um sog. Rovings handeln, welche aus parallel verlaufenden Fasern bestehen. Auch kann es sich um Fäden handeln, die aus verdrillten oder verzwirnten Fasern bestehen

Bei bekannten Nähverfahren dringt zunächst eine Nadel in den Schaumstoff ein und durchsticht diesen. Gleichzeitig bringt die Nadel den Faden in den Schaumstoff ein. Hierbei erstreckt sich während des Einsteckens in den Schaumstoff der Faden parallel zu und im Wesentlichen über die ganze Länge der Nadel. Die Lochgröße des Einstichloches wird somit durch den Nadeldurchmesser und die Stärke des Fadens bestimmt.

Nach dem Rückzug der Nadel aus dem Schaumstoff oder Textil verbleibt ein Loch, dessen Durchmesser im Vergleich zum Durchmesser des eingebrachten Fadens verhältnismäßig groß ist. Dies führt dazu, dass nach der Infiltration mit einem Harz der nicht mit Fasern ausgefüllte Lochbereich mit Harz gefüllt ist, was zu erhöhtem Gewicht des fertigen Bauteils führen kann, welches insbesonders in der Luft- und Raumfahrt vermieden werden soll.

DE 10 2005 024 408 A1 beschreibt die Verstärkung von Schaumwerkstoffen mittels eines Knüpfverfahrens, bei dem zunächst die Nadel das zu verstärkende Material (den Schaumwerkstoff) durchsticht und erst dann, im Bereich der Unterseite des Schaumwerkstoffes, das textile Halbzeug aufnimmt und bei der folgenden Rückwärtsbewegung durch das gestochene Loch zieht.

Auf diese Weise kann der Lochdurchmesser insgesamt verhältnismäßig klein gehalten werden.

WO 2007/012353 beschreibt ein Fertigungsverfahren zur Armierung von Kernmaterialien für Kernverbunde wobei zunächst ein Loch mittels eines Greifers in den Kernverbund gestochen wird und das Verstärkungsmaterial durch diesen Greifer in das Kernmaterial gezogen wird. Jedoch kann die Verbindung zwischen Verstärkungsmaterial und Kernmaterial noch verbessert werden.

WO 93/123441 beschreibt ein Verfahren zum Befestigen eines Halteteils in einer Ausnehmung eines Bauteils, das einen eine Vielzahl von Hohlräumen enthaltenden Kern z. B. in Schaumstoff oder Wabenstruktur enthält, der aus einem thermoplastischen Kunststoff besteht, das Verfahren aufweisend die Schritte:
- einbringen eines Stiftes (1) in einen Schaum- oder gefüllten bienenwabenförmigen (Anspruch 1) Kernwerkstoff wobei
- der Stift (1) und der Kernwerkstoff (6) einen thermoplastischen Kunststoff (Anspruch 1); oder eine Mischung thermoplastischer Kunststoffe enthalten;und
- der Stift (1) derartig erhitzt wird (Anspruch 1), dass der Kernwerkstoff (6) beim Einbringen des Stiftes an der Einbringstelle erweicht oder schmilzt (Anspruch 1); und/oder
- der Kernwerkstoff an der Einbringstelle erhitzt wird, so dass der Kernwerkstoff erweicht oder schmilzt (Anspruch 1). Darüber hinaus bezieht sich WO 93/123441 auch auf die durch dieses Verfahren hergestellte Schweißverbindung.

US 5,589,015 offenbart ein Verfahren und ein System zum Einfügen von Verstärkungsstiften in eine Verbundstruktur, in der eine Anzahl von Verstärkungsstiften in ein komprimierbares Material mit Hilfe von Ultraschallenergie eingesetzt werden.

WO 98/29243 beschreibt ein Ultraschall-Befestigungssystem, bei dem ein Ultraschallwandler verwendet wird, um eine Vielzahl von Befestigungselementen in zwei miteinander zu verbindenden Komponenten oder ein einzelnes zu verstärkendes Verbundteil einzufügen.

US 5,832,594 beschreibt ein Verfahren zur genauen Platzierung von Z-Stiften in Harz-Verbundteilen unter Verwendung eines Werkzeugs, das die Stifte aus einer Schaumvorform in das Verbundteil führt. Das Werkzeug weist einen Hubkolben auf, der den Schaum zerkleinert um die Stifte einzusetzen, und das Werkzeug kann die Eindringtiefe und die Positionierung der Z-Pins steuern.

Es ist eine Aufgabe der Erfindung eine verbesserten Kernverbund bereitzustellen.

Es sind ein Verfahren zur Herstellung verstärkter Kernverbunde, ein Kernverbund und ein Luftfahrzeug mit einem Kernverbund gemäss den Merkmalen der unabhängigen Ansprüche angegeben. Weiterbildungen der Erfindung ergeben sich aus den Unteransprüchen.

Die beschriebenen Ausführungsformen betreffen gleichermaßen das Herstellungsverfahren, das Werkzeug, die Sandwichstruktur und das Luftfahrzeug.

Die Erfindung betrifft ein Verfahren zur Herstellung verstärkter Kernverbunde, das Verfahren aufweisend die Schritte:
- einbringen eines Stiftes in einen schaum- oder gefüllten bienenwabenförmigen Kernwerkstoff
wobei
- der Stift und der Kernwerkstoff einen thermoplastischem Kunststoff oder eine Mischung thermoplastischer Kunststoffe enthalten;
   und
- der Stift derartig erhitzt wird, dass der Kernwerkstoff beim Einbringen des Stiftes an der Einbringstelle erweicht oder schmilzt; und/oder
- der Kernwerkstoff an der Einbringstelle erhitzt wird, so dass der Kernwerkstoff erweicht oder schmilzt
wobei das Kernmaterial partikelverstärkt ist, um das Kernmaterial lokal zu erwärmen.

Die Kernvernbunde erhältlich aus dem erfindungsgemäßen Verfahren weisen eine gute Stabilität auf. Zudem verbindet sich der Stift direkt mit dem Kernmaterial, da sowohl Stift als auch Kernmaterial bei dem Vorgang erweichen und sich verbinden. Es wird angenommen, dass beim Einbringen des Stiftes Material des Kernmaterial verdrängt, welches die angrenzenden Poren teilweise füllt und so zu einer größeren Kontaktfläche zwischen Kernmaterial und Stift führt welches zu der erhöten Stabilität führt.

"Erwärmen" und "erhitzen" wird im folgenden synonym verwendet.

Geeignete thermoplastische Kunststoffen sind beispielsweise Polyetherimid, Polyetheretherketone, Polyamid, Polyimid, Polyethersulfon, Polyurethan oder Polyvinylchlorid oder Mischungen hiervon.

Polyamid, Polyetherimid, Polyetheretherketone, oder Mischungen hiervon sind bevorzugt, z.B. eine Mischungen aus Polyetherimid und Polyetheretherketon in einem Gewichtsverhältnis von 65:35 bis 35:65.

Der Ausdruck "polymerer Bestandteil" bedeutet die Gesamtheit aller im jeweiligen Material, z.B. Stift, Kernmaterial, enthaltenen Polymere.

In einer Ausführungsform enthalten der Stift und der Kernwerkstoff die gleiche Art oder Arten von thermoplastischem Kunststoff(en).

Gleiche Art von thermoplastischem Kunststoff bedeutet, dass es sich um denselben Kunststofftyp jedoch das Material des Kerns und des Stiftes unterschiedliche physikalische Eigenschaften, z.B. Molekulargewicht, haben kann. Dies soll an folgendem nicht-einschränkenden, theoretischen Beispiel erläutert werden: Der Stift enthält beispielsweise ein Polyetherimid mit einem Molekulargewicht von 50000 g/mol und das Kernmaterial ein Polyetherimid mit einem Molekulargewicht von 80000 g/mol. Die Kunstoffe sind somit vom selben Typ (Polyetherimid) weisen jedoch unterschiedliche Molekulargewichte auf, sind also die gleiche Art von thermoplastischem Kunststoff.

Stift und/oder Kernmaterial können auch Mischungen von thermoplastischen Kunststoffen enthalten.Vorzugsweise werden jeweils die gleichen Arten von thermoplastischen Kunststoffen eingesetzt. Das Mischungsverhältnis innerhalb des Kernmaterials und des Stiftes kann jedoch unterschiedlich sein.

Dies soll an folgenden nicht-einschränkenden, therotetischen Beispielen erläutert werden: Der Stift enthält beispielsweise eine Mischung aus einem Polyetherimid mit einem Molekulargewicht von 50000 g/mol und einem Polyetheretherketon mit einem Molekulargewicht von 70000 g/mol in einem Mischungsverhältnis von 50:50. Das Kernmaterial enthält beispielsweise eine Mischung aus einem Polyetherimid mit einem Molekulargewicht von 80000 g/mol und einem Polyetheretherketon mit einem Molekulargewicht von 1200000 g/mol in einem Mischungsverhältnis von 60:40. Die Kunstoffe sind somit vom selben Typ (Polyetherimid/Polyetheretherketon) weisen jedoch unterschiedliche Molekulargewichte und Gewichtsverhältnisse auf, sind also die gleichen Arten von thermoplastischem Kunststoff.

Vorzugsweise enthalten der Stift und der Kernwerkstoff den gleichen thermoplastischem Kunststoff oder die gleiche Mischung thermoplastischer Kunststoffe. "Den gleichen thermoplastischem Kunststoff" bedeutet, dass dasselbe Kunststoffmaterial für Stift und Kernmaterial verwendet wird. "Die gleiche Mischung thermoplastischer Kunststoffe" bedeutet, dass die einzelnen Kunstoffe enthaltend in der Mischung gleich sind als auch das Mischungsverhältnis.

In einer Ausführungsform enthält der polymere Bestandteil des Stiftes und des Kernwerkstoffes zu je mindestens 90 Gew.-% den gleichen thermoplastischem Kunststoff oder die gleiche Mischung thermoplastischer Kunststoffe.

In einer weiteren Ausführungsform besteht der polymere Bestandteil des Kernmaterial zu 100 Gew.-% aus dem gleichen thermoplastischen Kunststoff oder der gleichen Mischung thermoplastischer Kunststoffe wie der Stift.

In einer Ausführungsform ist der Stift faserverstärkt. In einer bevorzugten Ausführungsform dieser Ausführungsform ist der faserverstärkte Stift ein Pultrudat.

Der Stift besteht vorzugsweise aus dem gleichen thermoplastischen Kunststoff oder der gleichen Mischung thermoplastischer Kunststoffe wie das Kernmaterial und, optional den zur Verstärkung eingesetzten Fasern.

Die thermoplastischen Kunststoffe können amorphe oder semikristalline Polymere sein.

Die Temperatur mit der der Stift und/oder der Kernwerkstoff an der Einbringstelle erhitzt wird, liegt üblicherweise oberhalb der der Glasübergangstemperatur T_{g} des thermoplastischen Kunststoffes des Kermaterials bzw. des Stiftes, bestimmt mittels dynamischer Differenzkalorimetrie gemäß DIN 65467.

Bei semikristallinen Polymeren ist die Temperatur normalerweise nicht höher als der Schmelzpunkt (Tₘ) + 50°C des semikristallinen Polymers des Kermaterials bzw. des Stiftes, bestimmt mittels dynamischer Differenzkalorimetrie gemäß DIN 65467.

Bei amorphen Polymeren ist die Temperatur normalerweise nicht höher als die Galsübergangstemperature (T_{g}) + 50°C des amorphen Polymers des Kermaterials bzw. des Stiftes, bestimmt mittels dynamischer Differenzkalorimetrie gemäß DIN 65467.

Sollte das Material mehr als eine Glasübergangstemperatur aufweisen, so ist für den o.g. Bereich die niedrigste Glasübergangstemperatur anzusetzen.

Sollte das Material mehr als eine Schmelztemperatur aufweisen, so ist für den o.g Bereich die höchste Schmelztemperatur anzusetzen.

Wenn Kernmaterial und Stift erhitzt werden wird normalerweise die Temperatur des Kernmaterials und des Stiftes aus oben genannten Bereichen ausgewählt.

Die Querschnittsfläche des Stiftes beträgt üblicherweise nicht mehr als 35 mm²

Der Stift kann z.B. rund, oval sein oder Ecken aufweisen.

In einer Ausführungsform wird nur das Kernmaterial erwärmt. In dieser Ausführungsform wird der Stift indirekt bei Kontakt mit dem erhitzen Kernmaterial ebenfalls erwärmt.

In einer anderen Ausführungsform wird der Stift und optional das Kernmaterial erhitzt. In dieser Ausführungsform kann der Stift spitz sein um ein Einbringen in das Kernmaterial zu erleichtern.

Um das Kernmaterial lokal zu erwärmen ist das Kermaterial partikelverstärkt. Diese Partikel sind vorzugsweise metallische Partikel . Durch metallische Partikel kann z.B. Induktionserwärmung genutzt werden. Aber auch die Erhitzung mittels LEDs, Laser und Elektronenstrahlen wird dadurch erleichtert.

Vor Einbringen des Stiftes kann optional ein Loch in das Kernmaterial gebohrt oder gestanzt werden. Ein derartiges Loch ist üblicherweise kleiner als der Stift, der eingebracht wird. "Kleiner" bedeutet in diesem Fall, dass nicht nur die Querschnittsfläche des Loches kleiner ist als die Querschnittsfläche des Stiftes, sondern, dass die Querschnittsfläche des Loches vollständig innerhalb der Querschnittsfläche des Stiftes liegt.

Durch ein derartiges Loch wird die Menge an Kernmaterial, welches der Stift beim Einbringen verdrängt reduziert welches zusätzlich zu einem reduzierten Gewicht der Kernverbundstruktur führt. Dies ist insbesondere in der Luft- und Raumfahrt von Vorteil. Zudem wird bei Stiften mit größeren Querschnitten, z.B. 20 mm² oder mehr, die Gefahr verringert, dass erweichtes oder geschmolzenes Kernmaterial aus dem Kern herausgerückt wird welches beseitigt werden muss.

Die Erwärmung des Stiftes bzw. des Kernmaterials kann beispielsweise durch LEDs, Laser, Elektronenstrahlen oder Induktion erfolgen. Derartige Methoden sind dem Fachmann bekannt.

Im Fall der Erwärmung des Kernmaterials an der Einbringstelle beträgt das Volumen des Kernmaterials welches erhitzt wird, vorzugsweise auf die oben genannten Temperaturbereiche, nicht mehr als das vierfache des Volumens welches der Stift innerhalb des Kernmaterials einnimmt, vorzugsweise nicht mehr als das dreifache.

Der Stift kann über das Kernmaterial hinausragen oder mit dem Kernmaterial abschließen. Im Falle eines Stiftes, der auf beiden Seiten mit dem Kermaterial abschließt, entspricht das Volumen welches der Stift innerhalb des Kernmaterials einnimmt dem Volumen des Stiftes. Sollte der Stift auf einer oder beiden Seiten hinausragen entspricht das Volumen welches der Stift innerhalb des Kernmaterials einnimmt, dem Volumen des Stiftes welches nicht über das Kernmaterial hinausragt.

Die Kernverbund-Struktur kann neben dem Kernmaterial vorzugsweise Deckschichten aus z. B. thermoplastische Prepregs, duroplastische Prepregs, Glasfaser- oder Kohlefaserverstärkten Kunststoffen, textilen Halbzeugen, Aramidfasern oder polymerem Material aufweisen. Die jeweiligen Verfahren zur Verbindung mit dem Kernmaterial sind dem Fachmann bekannt.

In einer Ausführungsform enthält die Kernverbundstruktur Deckschichten aus polymerem Material.

Diese Deckschichten werden üblicherweise mittels eines Klebefilms mit dem Kernmaterial verbunden.

In einer bevorzugten Ausführungsform enthalten die Deckschichten den gleichen thermoplastischem Kunststoff oder die gleiche Mischung thermoplastischer Kunststoffe wie das Kernmaterial als Matrix. In einer weiteren bevorzugten Ausführungsform bestehen der polymere Bestandteile der Deckschichten aus dem gleichen thermoplastischem Kunststoff oder der gleichen Mischung thermoplastischer Kunststoffe wie der polymere Bestandteil des Kernmaterial. In einer besonders bevorzugten Ausführungsform bestehen der polymere Bestandteile der Deckschichten, der polymere Bestandteile des Kernmaterials und der polymere Bestandteil der Stifte aus dem gleichen thermoplastischem Kunststoff oder der gleichen Mischung thermoplastischer Kunststoffe. Wie oben bereits erwähnt ist der Stift in einer bevorzugten Ausführungsform faserverstärkt und besteht aus diesen Fasern und dem gleichen thermoplastischem Kunststoff oder der gleichen Mischung thermoplastischer Kunststoffe wie das Kernmaterial. Geeignete Deckschichten sind oben erwähnt.

Bei Verwendung des gleichen thermoplastischen Kunststoffes kann optional auf den Klebefilm verzichtet werden und die Deckschichten direkt mit dem Kernmaterial z. B. mittels Wärmeübertrag und Diffusionsverbindung der Polymere Verbunden werden.

Abhängig von der Härte des Stiftes kann der die Einbringung des Stiftes sehr schnell erfolgen, z.B. durch eine Anordnung von ultraschallanimierten Einpressvorrichtungen. Hierbei wird vorzugsweise der Stift nicht direkt erhitzt.

Ein Vorteil der Erfindung ist, dass eine Auflage auf welcher der gesamte Kernverbund während des Verfahrens aufliegt nicht erforderlich ist. Es ist ausreichend, wenn der Kernverbund nur an der Stelle aufliegt an der der Stift eingebracht wird und der Kernverbund oder die Auflage neu posititioniert werden um an einer anderen Stelle des Kernverbundes einen Stift einzubringen. Das Material dieser Auflage wird üblicherweise derart gewählt, dass der Stift sich nicht mit der Auflage verbinden kann (z.B. Teflon oder Metall).

Die Erfindung betrifft ferner einen verstärkten Kernverbund enthaltend:
- einen schaum- oder gefüllten bienenwabenförmigen Kernwerkstoff; und
- Stifte innerhalb des Kernwerkstoffes;
wobei
- der Stift und der Kernwerkstoff einen thermoplastischem Kunststoff oder eine Mischung thermoplastischer Kunststoffe enthalten.

Die Erfindung betrifft ferner einen verstärkter Kernverbund erhältlich aus dem Verfahren gemäß der Erfindung.

Die Erfindung betrifft ferner ein Luftfahrzeug enthaltend einen verstärkten Kernverbund gemäß der Erfindung.

Die bevorzugten Ausführungsformen des Verfahrens sind ebenfalls bevorzugte Ausführungsformen des verstärkten Kernverbund, des verstärkten Kernverbunden erhältlich aus dem Verfahren gemäß der Erfindung und des Luftfahrzeuges enthaltend einen verstärkten Kernverbund gemäß der Erfindung.

## Patentansprüche

1. Verfahren zur Herstellung verstärkter Kernverbunde, das Verfahren aufweisend die Schritte:
- einbringen eines Stiftes in einen schaum- oder gefüllten bienenwabenförmigen Kernwerkstoff
wobei
- der Stift und der Kernwerkstoff einen thermoplastischen Kunststoff oder eine Mischung thermoplastischer Kunststoffe enthalten;
und
- der Stift derartig erhitzt wird, dass der Kernwerkstoff beim Einbringen des Stiftes an der Einbringstelle erweicht oder schmilzt; und/oder
- der Kernwerkstoff an der Einbringstelle erhitzt wird, so dass der Kernwerkstoff erweicht oder schmilzt,
und wobei das Kernmaterial partikelverstärkt ist, um das Kernmaterial lokal zu erwärmen.

2. Das Verfahren gemäß Anspruch 1, wobei das Erhitzen durch Induktion erfolgt.

3. Das Verfahren gemäß einem der vorangegangenen Ansprüche wobei der Stift faserverstärkt ist.

4. Das Verfahren gemäß einem der vorangegangenen Ansprüche wobei der Stift ein Pultrudat ist.

5. Das Verfahren gemäß einem der vorangegangenen Ansprüche wobei der Kernwerkstoff und, optional, der Stift erhitzt wird.

6. Das Verfahren gemäß Anspruch 5 wobei ausschließlich der Kernwerkstoff erhitzt wird.

7. Das Verfahren gemäß einem der vorangegangenen Ansprüche wobei der Stift und, optional, der Kernwerkstoff erhitzt wird.

8. Das Verfahren gemäß Anspruch 7 wobei ausschließlich der Stift erhitzt wird.

9. Das Verfahren gemäß einem der vorangegangenen Ansprüche wobei der thermoplastische Kunststoff oder die Mischung thermoplastischer Kunststoffe aus Polyetherimid, Polyetheretherketone, Polyamid, Polyimid, Polyethersulfon, Polyurethan oder Polyvinylchlorid oder Mischungen hiervon ausgewählt ist.

10. Das Verfahren gemäß Anspruch 9, wobei der thermoplastische Kunststoff oder die Mischung thermoplastischer Kunststoffe aus Polyamid, Polyetherimid, Polyetheretherketone, oder Mischungen hiervon ausgewählt ist.

11. Verstärkter Kernverbund erhältlich aus dem Verfahren gemäß einem der vorangegangenen Ansprüche.

12. Luftfahrzeug enthaltend einen verstärkten Kernverbund erhalten aus dem Verfahren gemäß einem der vorangegangenen Ansprüche 1 bis 10 oder enthaltend einen verstärkten Kernverbund gemäß Anspruch 11.

## Claims

1. Method for producing reinforced core composites, said method comprising the following steps:
- incorporating a pin into a foam or filled honeycomb-shaped core material;
wherein
- the pin and the core material contain a thermoplastic plastics material or a mixture of thermoplastic plastics materials;
and
- the pin is heated in such a manner that the core material softens or melts at the incorporation location when the pin is being incorporated; and/or
- the core material is heated at the incorporation location such that the core material softens or melts;
and wherein the core material is particle-reinforced so as to locally heat the core material.

2. Method according to Claim 1, wherein the heating is performed by induction.

3. Method according to one of the preceding claims, wherein the pin is fibre-reinforced.

4. Method according to one of the preceding claims, wherein the pin is a product of pultrusion.

5. Method according to one of the preceding claims, wherein the core material, and optionally the pin, is/are heated.

6. Method according to Claim 5, wherein exclusively the core material is heated.

7. Method according to one of the preceding claims, wherein the pin, and optionally the core material, is/are heated.

8. Method according to Claim 7, wherein exclusively the pin is heated.

9. Method according to one of the preceding claims, wherein the thermoplastic plastics material, or the mixture of thermoplastic plastics materials, is selected from polyetherimide, polyether ether ketone, polyamide, polyimide, polyether sulfone, polyurethane, or polyvinylchloride, or mixtures thereof.

10. Method according to Claim 9, wherein the thermoplastic plastics material, or the mixture of thermoplastic plastics materials, is selected from polyamide, polyetherimide, polyether ether ketone, or mixtures thereof.

11. Reinforced core composite obtainable from the method according to one of the preceding claims.

12. Aircraft containing a reinforced core composite obtained from the method according to one of preceding Claims 1 to 10, or containing a reinforced core composite according to Claim 11.

## Revendications

1. Procédé pour la préparation de composites à noyau renforcés, le procédé présentant les étapes de :
- introduction d'un crayon dans un matériau de noyau en nid d'abeille en mousse ou rempli
- le crayon et le matériau de noyau contenant un plastique thermoplastique ou un mélange de plastiques thermoplastiques ;
et
- le crayon étant chauffé de telle façon que le matériau de noyau ramollit ou fond au niveau de l'endroit d'introduction lors de l'introduction du crayon ; et/ou
- le matériau de noyau étant chauffé au niveau de l'endroit d'introduction de sorte que le matériau de noyau ramollisse ou fonde,
et le matériau de noyau étant renforcé par des particules, afin de réchauffer localement le matériau de noyau.

2. Procédé selon la revendication 1, le chauffage ayant lieu par induction.

3. Procédé selon l'une quelconque des revendications précédentes, le crayon étant renforcé par des fibres.

4. Procédé selon l'une quelconque des revendications précédentes, le crayon étant un pultrudat.

5. Procédé selon l'une quelconque des revendications précédentes, le matériau de noyau et, éventuellement, le crayon étant chauffé(s).

6. Procédé selon la revendication 5, uniquement le matériau de noyau étant chauffé.

7. Procédé selon l'une quelconque des revendications précédentes, le crayon et, éventuellement, le matériau de noyau étant chauffé(s).

8. Procédé selon la revendication 7, uniquement le crayon étant chauffé.

9. Procédé selon l'une quelconque des revendications précédentes, le plastique thermoplastique ou le mélange de plastiques thermoplastiques étant choisi parmi un polyétherimide, des polyétheréthercétones, un polyamide, un polyimide, une polyéthersulfone, un polyuréthane et un poly(chlorure de vinyle) et des mélanges correspondants.

10. Procédé selon la revendication 9, le plastique thermoplastique ou le mélange de plastiques thermoplastiques étant choisi parmi un polyamide, un polyétherimide, des polyétheréthercétones, et des mélanges correspondants.

11. Composite à noyau renforcé pouvant être obtenu par le procédé selon l'une quelconque des revendications précédentes.

12. Aéronef contenant un composite à noyau renforcé obtenu par le procédé selon l'une quelconque des revendications 1 à 10 ou contenant un composite à noyau renforcé selon la revendication 11.
